# EUROPEAN PATENT SPECIFICATION

(11) **EP 2 708 319 B1**
(45) Date of publication and mention of the grant of the patent: **03.12.2014**
(21) Application number: 12184638.0
(22) Date of filing: 17.09.2012
(51) Int. Cl.: B23Q 11/08

(54) **Actuating device for telescopic guards**
Stellgliedvorrichtung für ausfahrbaren Schutz
Dispositif d'actionnement pour protecteur télescopique

(43) Date of publication of application: 19.03.2014
(73) Proprietor: P.E.I. Protezioni Elaborazioni Industriali S.r.l., 40012 Calderara di Reno (Bologna) (IT)
(72) Inventor: Mantovani, Giambattista, 26037 SAN GIOVANNI IN CROCE (CREMONA) (IT); Benedetti, Michele, 40132 BOLOGNA (IT)
(74) Representative: Bianciardi, Ezio

(56) References cited:
- EP-A1- 1 074 337
- EP-A1- 1 410 876
- DE-U1- 20 305 481
- US-A- 3 565 153

## Description

This invention relates to an actuating device for telescopic guards of the type comprising a plurality of box-shaped members which are slidable inside one another in a substantially sealed manner. Guards of this kind are used, in industrial contexts, both for accident prevention and as protection against dirt, swarf, dust, coolants or lubricants for the slideways of movable working parts of machine tools, automatic machines or robotized equipment systems.

More specifically, the box-shaped member at one end of the telescopic guard is mounted at a fixed position, whereas the box-shaped member at the opposite end of the telescopic guard is solidly connected to the movable working part of the machine to be protected.

Generally speaking, telescopic guards are provided in pairs associated with each of the two sides of the feed stroke of the working part as the latter moves back and forth along the slideways. Thus, when the working part moves, one telescopic guard is extended while the other accordingly withdraws into itself, and vice versa.

According to a first prior art technique, movement of the working part along the slideways causes the box-shaped members to abut each other in cascade, extending or withdrawing each telescopic guard according to the direction in which adjacent box-shaped members are driven in abutment.

Telescopic guards of this kind are usually provided with damping elements, interposed between contiguous box-shaped members, because the movement of the box-shaped members into abutment against each other causes a succession of impacts of considerable intensity.

Although they reduce acceleration and deceleration of the box-shaped members, however, the damping elements are not able to provide them with the smooth movement that is, instead, desirable. To overcome this problem, actuating devices have been made according to a different prior art technique to open and close all the box-shaped members simultaneously. These devices are known both in the form of a set of chains operating on hook-up elements located in the individual box-shaped members and as articulations, varying in degree of complexity, located inside the box-shaped members.

For example, the box-shaped members may be connected to a pantograph which is hinged to each box-shaped member and whose two opposite ends are connected to the respective opposite ends of the telescopic guard. That way, extending and withdrawing the telescopic guard is controlled by the accordion-like movement of the pantograph which guarantees the uninterrupted, smooth movement of each box-shaped member.

Use of the pantograph has some drawbacks, however. First of all, the pantograph can be used only in telescopic guards made up of a limited number of box-shaped members, exceeding which the stiffness of the pantograph and the simultaneous movement of the box-shaped members would create excessively high stresses at the points where the pantograph is hinged to the box-shaped members. Secondly, the pantograph is not capable of damping the high and sudden accelerations and decelerations which the box-shaped members are subjected to and, for that reason, it can be used only for telescopic guards which are relatively slow.

According to yet another prior art technique, there are telescopic guards where the box-shaped members are connected up in twos and have two or more oil-hydraulic or pneumatic dampers interposed between them and independent of each other. Telescopic guards of this kind, however, are prone to frequent jamming because the independent action of the box-shaped members may be imbalanced or poorly coordinated on account of manufacturing differences, however, minor, causing one damper to behave differently from another.

Document EP1074337 discloses a device for driving and damping telescopic guards which has a drive rod slidable in a friction element and two circular bellows which are fitted round the rod.

This invention has for an aim to provide an actuating device for telescopic guards which is free of the above mentioned drawbacks. More specifically, the aim of this invention is to provide an actuating device for telescopic guards which allows the guards to operate at high speeds and without jamming of the box-shaped members.

A further aim of the invention is to provide an actuating device for telescopic guards which is simple and inexpensive to make and which can operate at high speeds and without jamming of the box-shaped members.

The invention accordingly provides an actuating device for telescopic guards as described in the appended claims.

The advantages of the invention are more apparent from the detailed description which follows, with reference to the accompanying drawings which illustrate a preferred non-limiting example embodiment of the invention. In these drawings:
- Figure 1 is a schematic perspective view of a telescopic guard equipped with an actuating device according to the invention;
- Figure 2 is a perspective view from underneath of a part of the guard of Figure 1 ;
- Figure 3 is a plan view from underneath of a part of the guard of Figure 1; and
- Figures 4 and 5 are two perspective views, with some parts cut away for clarity and in respective operating configurations, of an actuating cylinder made according to the invention and mounted in the telescopic guard as illustrated in Figures 2 and 3.

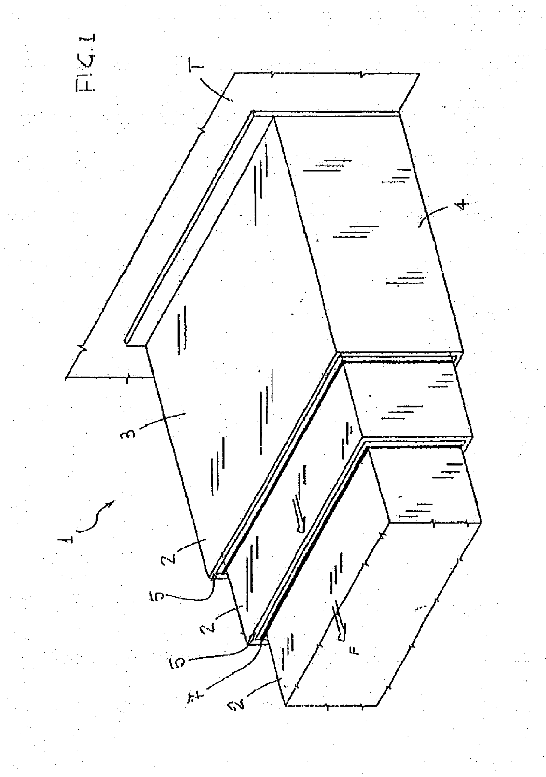

The numeral 1 in Figure 1 denotes in its entirety a telescopic guard designed to protect the slideways for movable working parts of machine tools, automatic machines or robotized equipment systems against dirt, swarf, dust, coolants or lubricants.

The guard 1 comprises a plurality of box-shaped members 2, made of sheet steel, which are slidable inside one another in a substantially sealed manner.

The box-shaped members 2 have a large protective wall 3 from which two side walls 4, or flanks, extend at right angles.

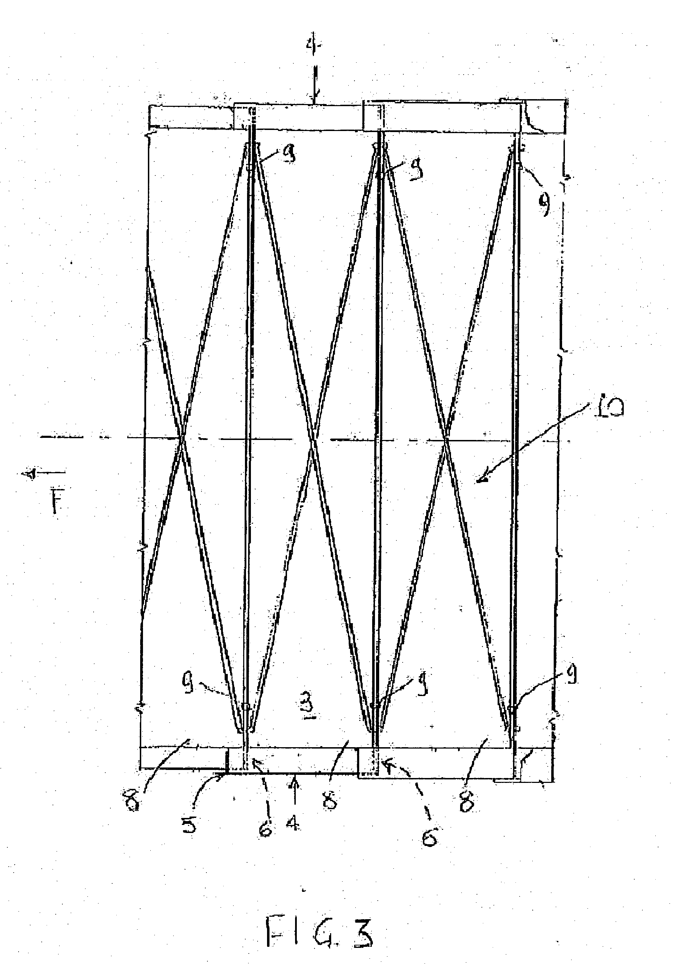

As better illustrated in Figure 3, the wall 3 is delimited by the flanks 4 and, in addition to those, by a front edge 5 and a rear edge 6 which both extend transversely to the line F of movement and mutual sliding of the box-shaped members 2.

On the opposite side of the wall 3, the flanks 4 are bent in the shape of an L in such a way that the box-shaped members 2 are transversely contained inside each other, from the innermost one to the outermost one.

The innermost box-shaped member 2 is fixed to a respective end of a movable part (not illustrated) which the guard 1 is associated with, whereas the outermost box-shaped member 2 is fixed to the frame T or to a fixed portion of the machine or piece of equipment to be protected.

At the front edge 5 of each box-shaped member 2 there is a scraper 7 of known type.

At the rear edge 6, each box-shaped member 2 also has a rear wall 8 extending at a right angle between the flanks 4.

Each box-shaped member 2 is equipped, in known manner, with rotary bearings 9 mounted on the wall 8 and with further rotary bearings (not illustrated) mounted on the flanks 4 to allow supporting and free sliding of the box-shaped members 2 relative to each other and of the telescopic guard 1 on the above mentioned slideways (not illustrated).

Each box-shaped member 2 is connected to each box-shaped member 2 adjacent to it by an actuating device 10.

The actuating device 10 connects the two rear walls 8 of each pair of adjacent box-shaped members 2 to each other and is thus housed in the space between the walls 8, on the outside of the inner box-shaped member 2 and on the inside of the outer box-shaped member 2.

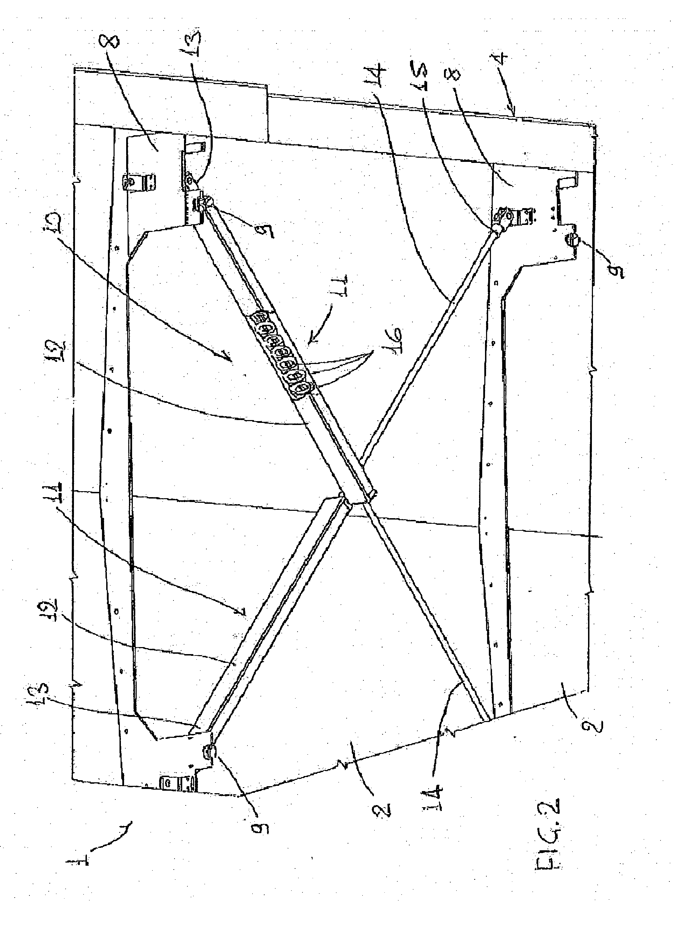

As better illustrated in Figure 2, the actuating device 10 comprises at least one actuating cylinder 11. More specifically, the actuating device 10 comprises a pair of actuating cylinders 11 mutually arranged in the shape of an X and totally independent of each other, both structurally and functionally.

More precisely, each cylinder 11 comprises a tubular body 12 hinged at an end of it 13 to the wall 8 of one box-shaped member 2, and a drive rod 14 slidably inserted in the body 12 and hinged at an end of it 15 to the wall 8 of the other box-shaped member 2.

The ends 13 of the two cylinders 11 are hinged to the same wall 8, whereas the ends 15 are both hinged to the other wall 8.

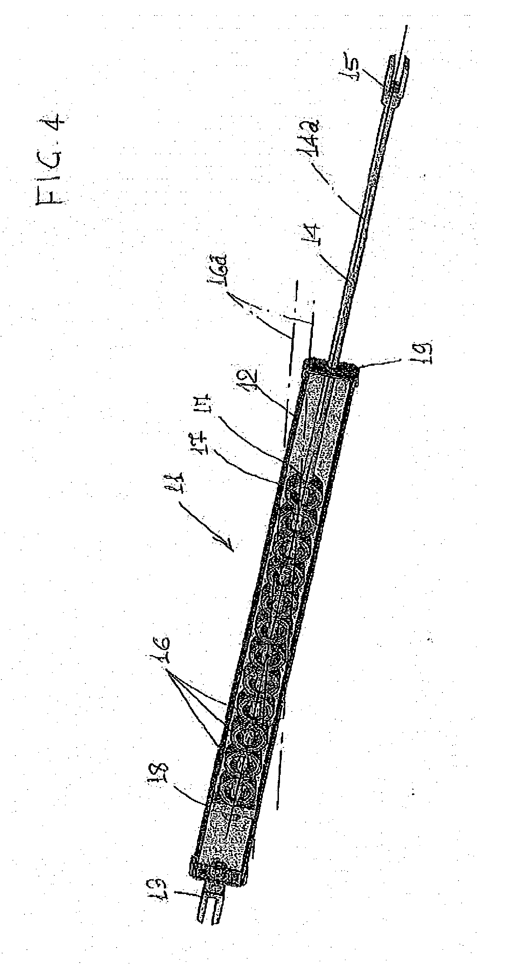

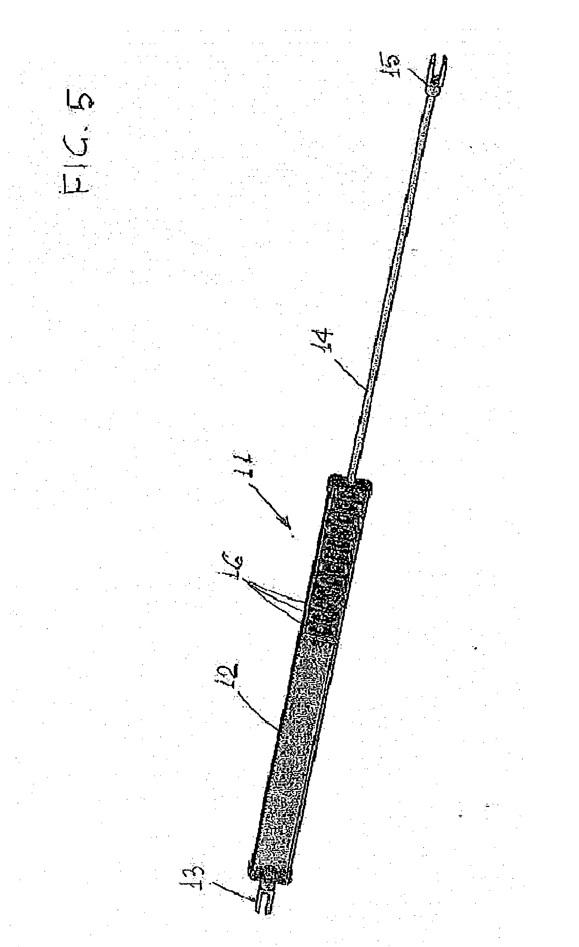

As illustrated in Figures 4 and 5, each cylinder 11 also comprises a plurality of damping rings 16 housed inside the tubular body 12 and operating on the respective rod 14.

The rings 16 are made of a resilient material. Preferably, the rings 16 are made of polyurethane.

The damping rings 16 are adjacent to each other and are positioned with their respective central axes 16a parallel to each other and at right angles to the central axis 14a of the rod 14. More precisely, each ring 16 is provided with two through holes 17 made in its lateral surface and the drive rod 14 is slidably coupled to the rings 16 through the holes 17.

When the rod 14 is drawn out of the tubular body 12, an end head 18 of the rod 14, opposite the end 15, compresses the rings 16 against each other and against an end 19 of the body 12, opposite the end 13.

Preferably, the rings 16 are obtained by transversally cutting a single tubular element of resilient material. This guarantees that they all have the same properties of compressibility and transversal elasticity.

That way, providing the cylinders 11 with the same number of rings, all having the same properties, guarantees that their action on each pair of cylinders 11 is substantially identical.

Thus, during operation, the passage of each pair of cylinders 11 from a withdrawn configuration (Figure 4) to an extended configuration (Figure 5), and vice versa occurs in coordinated and synchronized manner, so that the mutual driving action of the box-shaped members 2 is perfectly balanced.

The invention described is susceptible of industrial application and may be modified in several ways and in further embodiments without thereby departing from the scope of the inventive concept as defined by the appended claims.

## Claims

1. An actuating device for telescopic guards, the telescopic guards (1) comprising a plurality of box-shaped members (2) slidable inside each other; the device (10) comprising, for each pair of adjacent box-shaped members (2), at least one actuating cylinder (11); each actuating cylinder (11) in turn comprising a tubular body (12) connected, in use, to one box-shaped member (2), a drive rod (14) slidably inserted in the body (12) and connected, in use, to the other box-shaped member (2), and damping means (16) housed inside the tubular body (12) and operating on the rod (14); the device (10) being **characterized in that** the damping means (16) comprise a plurality of damping rings (16), made of a resilient material, adjacent to each other and positioned with their respective central axes (16a) parallel to each other and at right angles to the central axis (14a) of the rod (14).

2. The actuating device according to claim 1, **characterized in that** the rings (16) are made of polyurethane.

3. The actuating device according to any of the preceding claims, **characterized in that** each ring (16) is provided with two through holes (17) made in its lateral surface; the drive rod (14) being slidably coupled to the rings (16) through the holes (17).

4. The actuating device according to any of the preceding claims, **characterized in that** it comprises, for each pair of adjacent box-shaped members (2), a respective pair of actuating cylinders (11) arranged in the shape of an X relative to each other.

5. The actuating device according to any of the preceding claims, **characterized in that** the rings (16) are obtained by transversally cutting a single tubular element of resilient material.

6. A telescopic guard, in particular for machine tools, comprising an actuating device (10) according to any of the preceding claims and a plurality of box-shaped members (2) slidable inside each other, the actuating device (10) comprising, for each pair of adjacent box-shaped members (2), at least one actuating cylinder (11).

## Patentansprüche

1. Stellgliedvorrichtung für ausfahrbaren Schutz, wobei der ausfahrbare Schutz (1) eine Vielzahl von kastenförmigen Gliedern (2) umfasst, die ineinander verschiebbar sind; wobei die Vorrichtung (10) für jedes Paar benachbarter kastenförmiger Glieder (2) mindestens einen Stellgliedzylinder (11) umfasst; wobei jeder Stellgliedzylinder (11) wiederum einen rohrförmigen Körper (12), der während der Verwendung mit einem kastenförmigen Glied (2) verbunden ist, eine Antriebsstange (14), die verschiebbar in den Körper (12) eingeführt ist und während der Verwendung mit dem anderen kastenförmigen Glied (2) verbunden ist, sowie Dämpfungsmittel (16), die innerhalb des rohrförmigen Körpers (12) aufgenommen sind und auf der Stange (14) betätigt werden, umfasst; wobei die Vorrichtung (10) **dadurch gekennzeichnet ist, dass** die Dämpfungsmittel (16) eine Vielzahl von Dämpfungsringen (16) umfassen, die aus einem elastischen Material sind, zueinander benachbart sind und mit ihren jeweiligen Mittelachsen (16a) parallel zueinander und rechtwinklig zur Mittelachse (14a) der Stange (14) positioniert sind.

2. Stellgliedvorrichtung nach Anspruch 1, **dadurch gekennzeichnet, dass** die Ringe (16) aus Polyurethan sind.

3. Stellgliedvorrichtung nach einem der vorangehenden Ansprüche, **dadurch gekennzeichnet, dass** jeder Ring (16) in seiner Seitenfläche mit zwei Durchgangslöchern (17) ausgestattet ist; wobei die Antriebsstange (14) mit den Ringen (16) durch die Löcher (17) verschiebbar verkuppelt ist.

4. Stellgliedvorrichtung nach einem der vorangehenden Ansprüche, **dadurch gekennzeichnet, dass** sie für jedes Paar benachbarter kastenförmiger Glieder (2) ein jeweiliges Paar Stellgliedzylinder (11) umfasst, die relativ zueinander in Form eines X angeordnet sind.

5. Stellgliedvorrichtung nach einem der vorangehenden Ansprüche, **dadurch gekennzeichnet, dass** die Ringe (16) durch transversales Schneiden eines einzigen rohrförmigen Elements aus elastischem Material erhalten werden.

6. Ausfahrbarer Schutz, insbesondere für Werkzeugmaschinen umfassend eine Stellgliedvorrichtung (10) nach einem der vorangehenden Ansprüche und eine Vielzahl von ineinander verschiebbaren, kastenförmigen Gliedern (2), wobei die Stellgliedvorrichtung (10) für jedes Paar benachbarter kastenförmiger Glieder (2) mindestens einen Stellgliedzylinder (11) umfasst.

## Revendications

1. Dispositif d'actionnement pour protecteurs télescopiques, les protecteurs télescopiques (1) comprenant une pluralité d'organes en forme de boîtier (2) pouvant coulisser les uns dans les autres ; le dispositif (10) comprenant, pour chaque paire d'organes adjacents en forme de boîtier (2) au moins un cylindre d'actionnement (11) ; chaque cylindre d'actionnement (11) comprenant à son tour un corps tubulaire (12) relié, en fonctionnement, à un organe en forme de boîtier (2), une tige d'entraînement (14) insérée de façon coulissante dans le corps (12) et reliée, en fonctionnement, à l'autre organe en forme de boîtier (2) et des moyens d'amortissement (16) logés à l'intérieur du corps tubulaire (12) et agissant sur la tige (14) ; le dispositif (10) étant **caractérisé en ce que** les moyens d'amortissement (16) comprennent une pluralité d'anneaux d'amortissement (16), en matériau résilient, adjacents les uns par rapport aux autres et positionnés avec leurs axes centraux respectifs (16a) parallèlement les uns par rapports aux autres à angles droits par rapport à l'axe central (14a) de la tige (14).

2. Dispositif d'actionnement selon la revendication 1, **caractérisé en ce que** les anneaux (16) sont en polyuréthane.

3. Dispositif d'actionnement selon l'une quelconque des revendications précédentes, **caractérisé en ce que** chaque anneau (16) est pourvu de deux orifices de passage (17) réalisés dans sa surface latérale ; la tige d'entraînement (14) étant accouplée de façon coulissante aux anneaux (16) à travers les orifices (17).

4. Dispositif selon l'une quelconque des revendications précédentes, **caractérisé en ce qu'**il comprend, pour chaque paire d'organes adjacents en forme de boîtier (2), une paire respective de cylindres d'actionnement (11) disposés réciproquement en « X ».

5. Dispositif d'actionnement selon l'une quelconque des revendications précédentes, **caractérisé en ce que** les anneaux (16) sont obtenus en coupant transversalement un seul élément tubulaire en matériau résilient.

6. Protecteur télescopique, en particulier pour machines-outils, comprenant un dispositif d'actionnement (10) selon l'une quelconque des revendications précédentes et une pluralité d'organes en forme de boîtier (2) pouvant coulisser les uns dans les autres, le dispositif d'actionnement (10) comprenant, pour chaque paire d'organes en forme de boîtiers adjacents (2), au moins un cylindre d'actionnement (11).
